# EUROPEAN PATENT APPLICATION

(11) **EP 0 630 771 A1**
(43) Date of publication of application: **28.12.1994**
(21) Application number: 94107751.3
(22) Date of filing: 19.05.1994
(51) Int. Cl.: B60G 15/07, B60G 3/26

(54) **A front suspension for motor vehicles**

(30) Priority: 23.06.1993 IT TO930458
(71) Applicant: FIAT AUTO S.p.A., I-10135 Torino (IT)
(72) Inventor: Egidi, Corrado, I-10139 Torino (IT)
(74) Representative: Serra, Francesco

(57) **Abstract**

The suspension comprises a lower arm (14) articulated to the body (18) and to the wheel hub (8), and a strut (2) which is articulated to the body (18) and to the wheel hub (8) and has a limb (10). The arm (14) and the limb (10) are connected by means of a plate-like arm carrying bushes (28, 30) at its ends.

## Description

The present invention relates to front suspensions for motor vehicles, particularly suspensions of the MacPherson type which are fitted in vehicles having front-wheel drive and are constituted by a strut and a lower transverse arm both connected to the wheel hub.

Suspensions as described above are not suitable for controlling the camber angle; in particular, they do not enable the camber angle to be controlled throughout the travel of the wheel, so that it tends to open out progressively downwardly as it rises gradually towards the body of the car.

The object of the present invention is to provide a MacPherson front suspension for front-wheel-drive vehicles which prevents the aforesaid problem and is easy to construct and cheap.

A further object of the present invention is to provide a suspension as described above which is completely interchangeable with a conventional suspension without alteration of the body.

These objects are achieved by means of a MacPherson suspension having the specific characteristics recited in the following claims.

The invention will now be described with reference to the appended drawings, provided purely by way of non-limiting example, in which:
Figure 1 is a perspective view of the suspension of the invention, and
Figure 2 is a sectional view of a portion of Figure 1.

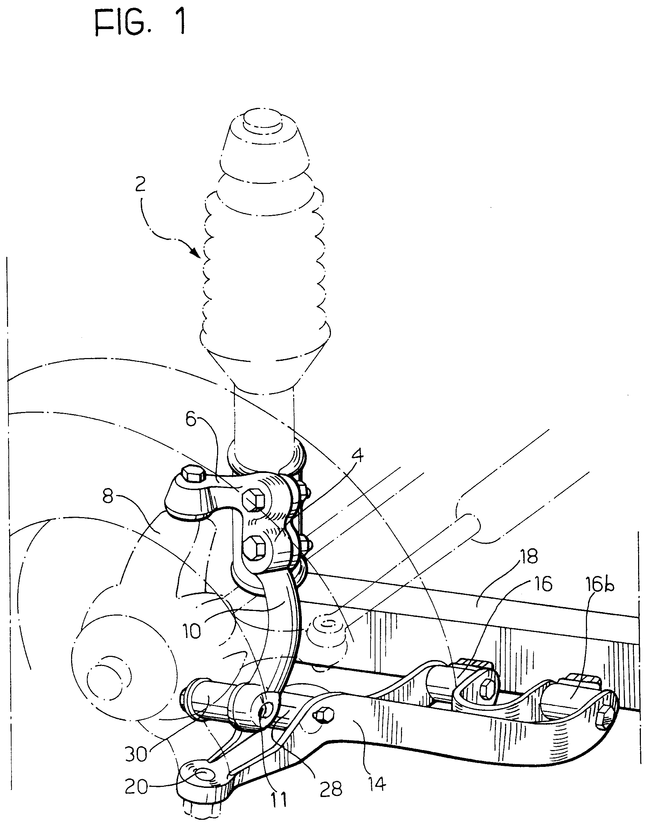

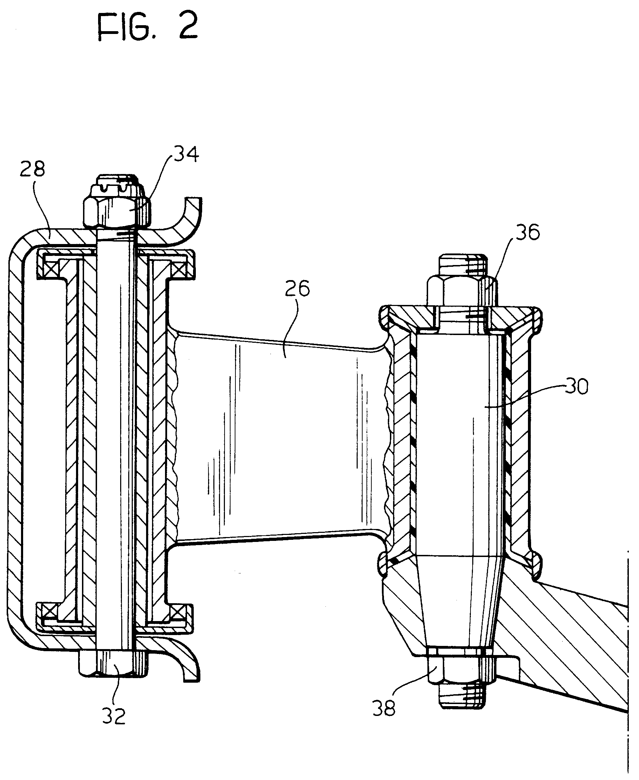

With reference to Figures 1 and 2, a shock-absorber with a coaxial spring is schematically indicated 2 and a substantially inverted-L-shaped arm 4 is fixed to the body of the shock-absorber, the first limb 6 of the arm 4 being articulated to the wheel hub 8 and its second limb 10 having a through-hole 11 at its end.

First ends of a lower arm 14 are articulated to the chassis 18 of the motor-vehicle (not shown) in known manner, for example, by means of two bushes 16 and 16b, and its second end 20 is articulated to the wheel hub 8.

Approximately in the central region of the lower arm 14, between the bush 16 and the end 20, the two cheeks of the lower arm 14 have through-holes for housing a bolt, the function of which will be explained below.

The ends of an intermediate plate-shaped arm 26 carry bushes 28 and 30 for connection to the second limb 10 and the lower arm 14, respectively.

The bush 28 is connected to the lower arm 14 in correspondence with through-holes in the cheeks of the arm and is fixed to the arm with the use of a bolt 32 and a nut 34.

The bush 30 is connected to the second limb 10, for example, with the use of nuts 36 and 38 on a pin (not shown) which is fixed to the second limb 10.

The intermediate plate-shaped arm 26 thus connects the second limb 10 and the lower arm 14 in an articulated manner, at the same time allowing torsional movement of the bush 28 relative to the bush 30.

In use, when the wheel rises towards the body of the vehicle, the arm 4 rises therewith; the bush 30 correspondingly rises and the articulation of the two bushes 28 and 30 by means of the intermediate plate-shaped arm 26 which connects them forces the arm 4 to perform a movement such as to increase the camber of the wheel until the shock-absorber reaches the end of its travel.

Inevitably, the axes of the bushes 30 and 28 do not remain parallel in the plane perpendicular to that of the plate 26 during this upward movement because of the loads bearing on the suspension and of the kinematic mechanism of the suspension itself.

The twisting moment produced is absorbed by the plate 26 which is deformed, within its elastic range, thus avoiding the need to insert a further articulation to allow small relative rotations between the bush 28 and the bush 30 in the plane perpendicular to that which contains the axes of the bushes 28 and 30.

Naturally, the principle of the invention remaining the same, wide variations may be applied to the suspension described and illustrated without, however, departing from the scope of the present invention.

## Claims

1. A MacPherson suspension for motor vehicles, particularly for the front driving wheels, comprising a wheel hub (8), a lower arm (14) of which first ends are articulated to the body (18) of the motor vehicle and the second end is articulated to the wheel hub (8), and a strut (2) which has a spring and a shock-absorber, is articulated to the body (18), and carries a substantially inverted-L-shaped arm (4), the arm (4) comprising a first limb (6) and a second limb (10), the first limb (6) being articulated to the wheel hub (8), characterized in that the second limb (10) of the arm (4) is connected to the lower arm (14) by means of an

2. A suspension according to Claim 1, characterized in that the intermediate arm (26) carries cylindrical bushes (28, 30) at its ends.

3. A suspension according to Claim 2, characterized in that the cylindrical bushes (28, 30) are fixed to the lower arm (14) and the second limb (10), respectively.

4. A suspension according to Claim 3, characterized in that the intermediate arm (26) is a metal plate.
